# FASCICULE DE BREVET EUROPEEN

(11) **EP 1 846 260 B1**
(45) Date de publication et mention de la délivrance du brevet: **11.09.2013**
(21) Numéro de dépôt: 05793526.4
(22) Date de dépôt: 27.07.2005
(51) Int. Cl.: G01D 13/04, B60K 37/02

(54) **TABLEAU DE BORD A DEUX FACES AVANT**
INSTRUMENTENTAFEL MIT ZWEI VORDERFLÄCHEN
INSTRUMENTAL PANEL COMPRISING TWO FRONT FACES

(30) Priorité: 18.08.2004 FR 0408952
(43) Date de publication de la demande: 24.10.2007
(73) Titulaire: Johnson Controls Technology Company, Holland, MI 49423 (US)
(72) Inventeur: FOURNIER, Joël, F-95000 Cergy (FR)
(74) Mandataire: Bloch, Gérard
(86) Numéro de dépôt international: PCT/FR2005/001959
(87) Numéro de publication internationale: WO 2006/024748

(56) Documents cités:
- EP-A- 0 964 253
- WO-A-03/016086
- DE-A1- 4 407 855
- FR-A- 2 715 614
- US-A1- 2003 210 535

## Description

L'invention concerne un tableau de bord avec au moins un indicateur comportant un cadran supporté par une face avant, notamment pour véhicule automobile ou tout autre engin de locomotion.

Un tableau de bord de véhicule automobile comprend généralement un ensemble d'indicateurs, par exemple un indicateur de vitesse, un indicateur compte-tours du moteur, un indicateur de niveau d'essence, et notamment des indicateurs à aiguille.

L'aiguille d'un indicateur, commandée et entraînée en rotation par un moteur, ou mouvement, s'étend généralement devant un support portant des caractères d'indication sérigraphiés formant un cadran (des graduations et des valeurs, notamment). L'indicateur est monté dans un réhaut d'habillage servant de protection et de cache et supportant une vitre de protection.

Le support des caractères d'indication sérigraphiés porte le nom de face avant. Elle est généralement constituée d'une feuille épaisse en matière plastique opaque ou translucide.

La demanderesse a cherché à proposer un tableau de bord original offrant de nombreuses possibilités pour la disposition des caractères d'indication, notamment la disposition des graduations par rapport aux valeurs les désignant, pour le rendu d'effets de reliefs et pour le jeu avec des effets de transparence et d'opacité.

L'art antérieur ne propose en effet que des dispositifs dans lesquels les possibilités sont réduites, limitées à des effets de relief spécifiques. Ainsi, par exemple, on connaît des dispositifs comportant une aiguille indicatrice, entraînée en rotation devant une face avant sérigraphiée et formée en relief, des dispositifs dans lesquels une aiguille est entraînée en rotation à l'arrière d'une face avant plane, des dispositifs comportant une aiguille entraînée en rotation devant une face avant, avec une vitre de protection disposée à l'avant et comportant elle aussi des caractères d'indication. Les alternatives offertes au concepteur d'un indicateur se résument donc à donner un effet de relief à une face avant, à jouer sur la disposition de la face avant par rapport à l'aiguille ou à donner à une vitre de protection la fonction de vitre avant. Ces alternatives sont d'une application réduite.

US 2003/210535 divulgue un tableau de bord selon le préambule de la revendication 1 comportant au moins un indicateur à aiguille comprenant un cadran de caractères d'indication, supportés par une face avant, une aiguille indicatrice et un moteur pour entraîner en rotation l'aiguille le long du cadran, avec une deuxième face avant support d'autres caractères d'indication, l'aiguille étant disposée entre les deux faces avant.

En effet, des caractères d'indication peuvent être portés par les deux faces avant de l'indicateur, qui proposent chacun individuellement les potentialités inhérentes à leur nature, ce qui offre de nombreuses possibilités d'effets visuels esthétiques. A ce titre, on peut même parler d'un tableau de bord universel.

Selon l'invention, le cadran est formé par une combinaison des caractères d'indication de ladite une face avant et des dits autres caractères d'indication de ladite deuxième face avant.

. De préférence,- une des deux faces avant au moins présente des structures en relief.

Avantageusement dans ce cas, ladite face avant présentant des structures en relief a été réalisée par sérigraphie à plat avant d'être conformée en relief.

Avantageusement, le tableau de bord comporte des moyens d'éclairage situés à l'arrière des deux faces avant.

Avantageusement encore, la deuxième face avant remplit la fonction d'une vitre de protection.

L'invention concerne également un procédé de formation d'une face avant pour le tableau de bord présenté ci-dessus, tableau dans lequel la face avant est formée à partir d'une feuille de polycarbonate, d'épaisseur comprise entre 0,3 et 0,5 mm, procédé caractérisé par le fait que la face avant est sérigraphiée à plat, puis est conformée en relief, par formage à froid ou à chaud.

L'invention sera mieux comprise à l'aide de la description suivante de deux formes de réalisation du tableau de bord de l'invention, en référence au dessin annexé, sur lequel :
- la figure 1 représente une vue en coupe d'une première forme de réalisation du tableau de bord de l'invention et
- la figure 2 représente une vue en coupe d'une deuxième forme de réalisation du tableau de bord de l'invention.

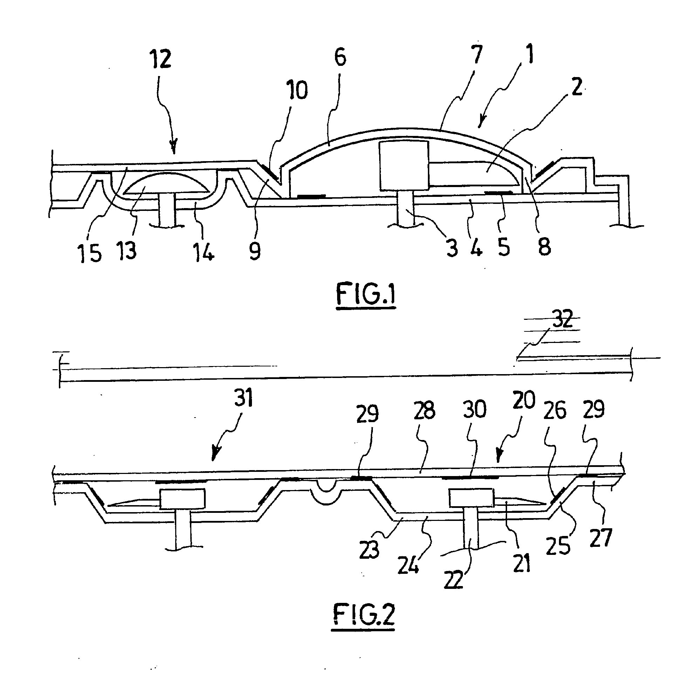

En référence à la figure 1, un tableau de bord comporte deux indicateurs 1 et 12, l'indicateur 1 comprenant une aiguille 2, entraînée en rotation par un moteur, non représenté, par le biais d'un moyeu 3.

L'aiguille 2 s'étend devant une première face avant 4 dont la portion associée à l'indicateur 1 est plane. Cette première face avant 4 est ici partiellement translucide. Elle comporte des caractères d'indication 5, sérigraphiés sur sa surface avant. Il s'agit ici de graduations 5 d'une échelle de comptage pour le cadran de l'indicateur 1.

A l'avant de la première face avant 4 et de l'aiguille 2 s'étend une deuxième face avant 6, qui est aussi partiellement translucide. Elle est formée afin de s'étendre en relief, pour donner un effet visuel particulier à l'indicateur 1. En l'espèce, la deuxième face avant 6 a été formée afin de s'ériger, dans sa portion associée à l'indicateur 1, en une enveloppe en forme de coupole 7 à l'avant de l'aiguille 2. Une paroi cylindrique 8 s'étend vers l'arrière à partir du bord annulaire de la coupole 7, jusqu'au contact avec l'avant de la première face avant 4, à partir de laquelle s'étend vers l'avant une paroi 9 de forme tronconique, portant des caractères d'indication, ici des chiffres 10 sérigraphiés, qui donnent des valeurs aux graduations 5, qui se situent dans l'enceinte de la coupole 7, et forment en combinaison avec elles le cadran de l'indicateur 1, dont l'aiguille 2 indique les valeurs.

Les deux faces avant 4, 6 sont ici éclairées par l'arrière, par exemple par des diodes électroluminescentes, non représentées, de façon bien connue de l'homme du métier. La sérigraphie formant les graduations 5 et les chiffres 10 peut ici, soit être opaque de façon à ce que les caractères d'indication apparaissent en ombres chinoises, soit être translucide, de couleur différente par rapport au contour des caractères, pour qu'ils apparaissent transparents, soit être une combinaison des deux.

Le deuxième indicateur 12, similaire au premier, comprend également une aiguille 13, qui est ici une aiguille en forme de dôme, un prolongement 14 de la première face avant 4 situé à l'arrière de l'aiguille 13 et un prolongement 15 de la deuxième face avant 6 situé à l'avant de l'aiguille 13. Le prolongement 14 de la première face avant 4 est formé en une cuvette de réception de l'aiguille 13, le prolongement 15 de la deuxième face avant 6 étant plan. Les deux indicateurs 1, 12 peuvent être éclairés par les mêmes moyens d'éclairage.

Dans la forme de réalisation préférée du tableau de bord, chacune des faces avant 4, 6 est issue d'une feuille de polycarbonate relativement fine, en l'espèce d'une épaisseur comprise entre 0,3 et 0,5 mm. Une telle feuille de polycarbonate est relativement souple. La feuille est sérigraphiée à plat, c'est-à-dire qu'elle est disposée en un plan et que les caractères d'indication 5, 10 y sont sérigraphiés. Une fois sérigraphiée, la feuille est conformée en relief. Cette opération de formage peut avoir lieu à froid ou à chaud, s'agissant dans le dernier cas de thermoformage. Le formage à froid est envisageable du fait de la finesse de la feuille. Un avantage d'un tel procédé de formation des faces avant 4, 6 est son coût réduit; puisque la sérigraphie à plat est beaucoup plus simple qu'une sérigraphie en relief. Le concepteur a dès lors tout le loisir de donner à la face avant 4, 6 toute forme en relief intéressante esthétiquement ou fonctionnellement, d'une part parce que la sérigraphie a déjà été appliquée, d'autre part parce que la finesse des feuilles leur donne une grande souplesse de formage.

Il est de surcroît possible, en donnant une forme ad hoc à une feuille de polycarbonate, de la rigidifier. Il en va ainsi, par exemple, d'une feuille de polycarbonate en forme de dôme ou coupole, comme c'est ici le cas pour la deuxième face avant 6 du premier indicateur 1. Ainsi rigidifiée, la face avant 6 peut remplir la fonction d'une vitre de protection, qui est de protéger l'indicateur, notamment l'aiguille, de l'extérieur ; elle peut, à cet effet, être de surcroît traitée anti-reflets. Un autre avantage du tableau de bord apparaît dès lors. La fonction de face avant n'est pas donnée à une vitre de protection en la sérigraphiant, mais, la forme d'une telle vitre de protection étant simple, rigide et non modifiable, on donne ici à une face avant la fonction d'une vitre de protection, possédant de surcroît tous les avantages d'une face avant, que ce soit son aptitude à être formée en relief ou la possibilité de la sérigraphier en couleurs, au niveau des caractères d'indication ou en dehors de ces derniers.

Il va de soi que la fonction de vitre de protection pour la face avant 6 pourrait être obtenue plus simplement, c'est-à-dire sans définir une forme dont les contraintes entraînent la rigidité de la feuille, par l'utilisation d'une feuille de polycarbonate plus épaisse que celle utilisée dans la forme de réalisation qui vient d'être décrite. L'épaisseur de la feuille assure alors sa rigidité et donc sa fonction.

On voit sur la figure 2 une deuxième forme de réalisation du tableau de bord de l'invention.

Un premier indicateur 20 comprend ici une aiguille 21, entraînée en rotation par un moteur, par le biais d'un moyeu 22, s'étendant devant une première face avant 23 partiellement translucide. Cette première face avant 23 présente une paroi de fond 24, circulaire plane, s'étendant sous l'aiguille 21, à partir du bord de laquelle s'étend vers l'avant une paroi tronçonique 25 comportant des caractères d'indication, ici des graduations 26 d'une échelle de comptage du cadran de l'indicateur. A partir du bord avant de cette paroi tronconique 25 s'étend une portion de paroi plane 27, parallèle à la paroi de fond 24.

A l'avant de la première face avant 23 et de l'aiguille 21, s'étend une deuxième face avant 28 partiellement translucide. Cette deuxième face avant 28 est plane et s'étend juste à l'avant de la portion de paroi plane 27 de la première face avant 23. Elle comporte, sur sa surface interne, des caractères d'indication, des chiffres 29, formant avec les graduations le cadran de l'indicateur 20. Elle comporte également un masque circulaire 30, sérigraphié au droit du moyeu de l'aiguille 21 et cachant la partie centrale de l'aiguille 21.

De la même façon que précédemment, l'indicateur 20 est éclairé par l'arrière. L'apparence des caractères d'indication est obtenue comme décrit plus haut.

Le tableau de bord de la figure 2 comprend un deuxième indicateur 31, identique au premier indicateur 20, formé à partir des mêmes faces avant 23, 28 et éclairé par l'arrière avec le premier indicateur.

Les faces avant 23, 28 sont formées selon le même procédé que celui décrit précédemment, à savoir une sérigraphie à plat suivi d'un formage en relief, pour la face qui comporte des structures en relief.

Le tableau de bord comporte en outre ici une vitre de protection 32, qui s'étend à l'avant des deux indicateurs 20, 31. Les deux faces avant 23, 28 remplissent donc ici uniquement une fonction de face avant. L'avantage de cette forme de réalisation est la liberté totale pour le concepteur d'agencer les faces avant 23, 28 à son goût, sans contraintes de forme en lien avec la rigidité de la feuille, la fonction de protection étant indépendamment remplie par la vitre de protection.

Grâce à l'invention, de multiples possibilités pour l'apparence du cadran d'un indicateur sont offertes à son concepteur, qui peut agencer facilement le formage des deux faces avant pour leur donner des effets de relief, indépendamment l'une de l'autre ou en lien l'une avec l'autre, la disposition des caractères d'indication sérigraphiés, sur une même face avant ou les uns par rapport aux autres sur deux faces avant, notamment des graduations par rapport à des chiffres les désignant, ainsi que la disposition d'autres indications ou motifs tels que des caches, des sigles, ...

Le caractère universel de l'indicateur de l'invention ressort nettement à l'étude des multiples avantages, corrélés ou décorrélés, qui ont été soulevés.

L'invention a été décrite en relation avec un éclairage seul par l'arrière, mais il pourrait être ajouté un éclairage par l'avant, avec par exemple des caractères d'indication phosphorescents.

De surcroît, les sérigraphies peuvent être appliquées d'un côté ou de l'autre des faces avant, qui peuvent par ailleurs être de couleurs différentes, au moins sur certaines de leurs portions.

En outre, des motifs matériels autres que des motifs sérigraphiés peuvent être ajoutés aux faces avant. Par exemple, la face avant s'étendant devant l'aiguille peut comporter un cabochon solide pour cacher la partie centrale de l'aiguille, ou au contraire un évidement lui permettant de faire saillie hors de sa surface.

Les faces avant ont toutes deux été décrites translucides. Celle située à l'arrière des aiguilles pourrait être opaque et celle située à l'avant translucide, l'éclairage étant alors rapporté, soit à l'avant des faces avant, soit entre les deux.

Il va de soi qu'il pourrait être prévu plus de deux faces avant.

## Revendications

1. Tableau de bord comportant au moins un indicateur à aiguille (1, 12, 20, 31) comprenant un cadran de caractères d'indication (5, 26) sérigraphiés supportés par une face avant (4, 23), une aiguille indicatrice (2, 21), et un moteur pour entraîner en rotation l'aiguille le long du cadran **caractérisé par le fait qu'**il comporte une deuxième face avant (6, 28) support d'autres caractères d'indication (10, 29, 30) sérigraphiés, l'aiguille (2, 21) étant disposée entre les deux faces avant ((4, 6), (23, 28)), le cadran étant formé par une combinaison des caractères d'indication (5, 26) de ladite une face avant (4, 23) et des caractères d'indication (10, 29) de la dite deuxième face avant (6, 28).

2. Tableau de bord selon la revendication 1, dans lequel une des deux faces avant ((4, 6), (23, 28)) au moins présente des structures en relief.

3. Tableau de bord selon la revendication 2, dans lequel ladite face avant ((4, 6), (23, 28)) présentant des structures en relief a été réalisée par sérigraphie à plat avant d'être conformée en relief.

4. Tableau de bord selon l'une des revendications 1 à 3, dans lequel il est prévu des moyens d'éclairage situés à l'arrière des deux faces avant ((4, 6), (23, 28)).

5. Tableau de bord selon la revendication 4, dans lequel certains caractères d'indication (5, 10, 26, 29) sont sérigraphiés de manière opaque pour apparaître en ombres chinoises.

6. Tableau de bord selon l'une des revendications 4 et 5, dans lequel certains caractères d'indication (5, 10, 26, 29) sont sérigraphiés de manière translucide.

7. Tableau de bord selon l'une des revendications 1 à 6, dans iequei une face avant ((4, 6), (23, 28)) au moins est issue d'une feuille de polycarbonate d'une épaisseur comprise entre 0,3 et 0,5 mm.

8. Tableau de bord selon l'une des revendications 1 à 6, dont la deuxième face avant (6, 28), qui est issue d'une feuille de polycarbonate d'une épaisseur comprise entre 0,3 et 0,5 mm, est formée de façon à être rigidifiée et ainsi assurer la fonction d'une vitre de protection.

## Patentansprüche

1. Armaturenbrett, umfassend mindestens eine Anzeige mit Zeiger (1, 12, 20, 31), umfassend eine Skala aus Siebdruck-Anzeigebuchstaben (5, 26), die von einer Frontfläche (4, 23) getragen werden, einen Zeiger (2, 21) und einen Motor, um den Zeiger entlang der Skala in Drehung anzutreiben, **dadurch gekennzeichnet, dass** es eine zweite Frontfläche (6, 28) umfasst, die weitere Siebdruck-Anzeigebuchstaben (10, 29, 30) trägt, wobei der Zeiger (2, 21) zwischen den beiden Frontflächen ((4, 6), (23, 28)) angeordnet ist, wobei die Skala von einer Kombination von Anzeigebuchstaben (5, 26) der einen Frontfläche (4, 23) und von Anzeigebuchstaben (10, 29) der zweiten Frontfläche (6, 28) gebildet ist.

2. Armaturenbrett nach Anspruch 1, bei dem zumindest eine der Frontflächen ((4, 6), (23, 28)) eine reliefartige Struktur aufweist.

3. Armaturenbrett nach Anspruch 2, bei dem die Frontfläche ((4, 6), 23, 28)), die reliefartige Strukturen aufweist, durch Siebdruck flach hergestellt wurde, bevor sie zum Relief ausgebildet wurde.

4. Armaturenbrett nach einem der Ansprüche 1 bis 3, bei dem Beleuchtungsmittel vorgesehen sind, die sich hinter den beiden Frontflächen ((4, 6), (23, 28)) befinden.

5. Armaturenbrett nach Anspruch 4, bei dem gewisse Anzeigebuchstaben (5, 10, 26, 29) opak durch Siebdruck gebildet sind, um als Schattenbuchstaben zu erscheinen.

6. Armaturenbrett nach einem der Ansprüche 4 und 5, bei dem gewisse Anzeigebuchstaben (5, 10, 26, 29) durchscheinend durch Siebdruck gebildet sind.

7. Armaturenbrett nach einem der Ansprüche 1 bis 6, bei dem mindestens eine Frontfläche ((4, 6), (23, (28)) aus einer Polykarbonatfolie mit einer Dicke zwischen 0,3 und 0,5 mm hergestellt ist.

8. Armaturenbrett nach einem der Ansprüche 1 bis 6, dessen zweite Frontfläche (6, 28), die aus einer Polykarbonatfolie mit einer Dicke zwischen 0,3 und 0,5 mm hergestellt ist, derart ausgebildet ist, dass sie versteift ist und so die Funktion einer Schutzscheibe gewährleistet.

## Claims

1. Instrument panel having at least one needle indicator (1, 12, 20, 31) comprising a dial of screen-printed indicating characters (5, 26) supported by one front face (4, 23), an indicating needle (2, 21) and a motor for rotating the needle along the dial, **characterised in that** it has a second front face (6, 28) for supporting other screen-printed indicating characters (10, 29, 30), the needle (2, 21) being arranged between the two front faces ((4, 6), (23, 28)), the dial being formed by a combination of the indicating characters (5, 26) of said one front face (4, 23) and of the indicating characters (10, 29) of said second front face (6, 28).

2. Instrument panel according to claim 1, wherein at least one of the two front faces ((4, 6), (23, 28)) has structures in relief.

3. Instrument panel according to claim 2, wherein said front face ((4, 6) (23, 28)) having structures in relief has been produced by flat screen-printing before being shaped in relief.

4. Instrument panel according to any of claims 1 to 3, wherein illumination means located behind the two front faces ((4, 6), (23, 28)) are provided.

5. Instrument panel according to claim 4, wherein some indicating characters (5, 10, 26, 29) are screen-printed in an opaque manner so as to appear as Chinese shadows.

6. Instrument panel according to either claim 4 or claim 5, wherein some indicating characters (5, 10, 26, 29) are screen-printed in a translucent manner.

7. Instrument panel according to any of claims 1 to 6, wherein at least one front face ((4, 6), (23, 28)) is made from a polycarbonate sheet with a thickness of between 0.3 and 0.5 mm.

8. Instrument panel according to any of claims 1 to 6, of which the second front face (6, 28), which is made from a polycarbonate sheet with a thickness of between 0.3 and 0.5 mm, is formed so as to be stiffened and thus to function as a protective window.
